# EUROPEAN PATENT APPLICATION

(11) **EP 4 467 265 A1**
(43) Date of publication of application: **27.11.2024**
(21) Application number: 24166055.4
(22) Date of filing: 25.03.2024
(51) Int. Cl.: B22F 10/28, B22F 10/85, B22F 12/45, B33Y 10/00, B33Y 50/00, B33Y 50/02, G06F 30/28

(54) **LASER-PLUME INTERACTION FOR PREDICTIVE DEFECT MODEL FOR MULTI-LASER POWDER BED FUSION ADDITIVE MANUFACTURING**

(30) Priority: 25.05.2023 US 202318201790
(71) Applicant: RTX Corporation, Farmington, CT 06032 (US)
(72) Inventor: Anahid, Masoud, Galena, 43021 (US); Lynch, Matthew E., Canton, 06019 (US); Surana, Amit, Newington, 06111 (US); MacDonald, Malcolm P., Bloomfield, 06002 (US); Fisher, Brian A., West Hartford, 06117 (US)
(74) Representative: Schmitt-Nilson Schraud Waibel Wohlfrom Patentanwälte Partnerschaft mbB

(57) **Abstract**

A process for a laser plume interaction for a predictive defect model for multi-laser additive manufacturing of a part including executing computational fluid dynamics modeling of a gas flow in an additive manufacturing machine manufacturing chamber; approximating a laser plume relative to a melt pool on a powder bed disposed on a build plate within the manufacturing chamber; executing a space-time analysis to identify a laser plume interaction; creating a plume interaction zone map; feeding the plume interaction zone map prediction into a multi-laser defect model; and predicting defect location and density to accumulate lack-of-fusion risk as a function of part placement, orientation, and scan strategy.

## Description

The present disclosure relates generally to additive manufacturing, and more specifically to a process for predicting the location and size of laser plume interaction and the impact on defect formation in multi-laser additive manufacturing operations.

Additive manufacturing is a process that is utilized to create components by applying sequential material layers, with each layer being applied to the previous material layer. As a result of the iterative, trial and error, construction process, multiple different parameters affect whether an end product created using the additive manufacturing process includes flaws or is within acceptable tolerances of a given part. Typically, components created using an additive manufacturing process are designed iteratively, by adjusting one or more parameters each iteration and examining the results to determine if the results have the required quality.

Multi-laser additive manufacturing (AM) technology is a promising process to increase allowable part size and rate of production. However, multiple lasers in additive systems could add further complications and challenges to material quality. There is no known tool to predict defect formation and dependency to process parameters for multi-laser applications. It is known how to predict defect type, density and location at the part level under a single laser operation. An example can be the teaching in US patent 10,252,512 which is incorporated by reference herein.

What is not well known is the prediction of the effect of laser plume for multi-laser operation. Multi-laser additive manufacturing, owing to multiple lasers is capable of producing laser plume interaction at a given time and subsequent lack of fusion defect formation. As the number of lasers acting simultaneously increases, the likelihood of multi-laser interaction goes up.

What is needed is a process for accounting for the effect of one laser operating in the plume of another laser and influencing types of defects in components produced by multi-laser powder bed fusion additive manufacturing (PBFAM).

In accordance with the present disclosure, there is provided a system comprising a computer readable storage device readable by the system, tangibly embodying a program having a set of instructions executable by the system to perform the following steps for predicting defects in powder bed fusion additive manufacturing process for a part, the set of instructions comprising an instruction to execute computational fluid dynamics modeling of a gas flow in an additive manufacturing machine manufacturing chamber; an instruction to approximate a laser plume relative to a melt pool on a powder bed disposed on a build plate within the manufacturing chamber; an instruction to execute space-time analysis to identify a laser plume interaction; an instruction to create a plume interaction zone map; an instruction to feed the plume interaction zone map prediction into a multi-laser defect model; and an instruction to predict defect location and density to accumulate lack-of-fusion risk as a function of part placement, orientation, and scan strategy.

Particular embodiments may further include at least one, or a plurality of, the following optional features. Each of these optional features may be added separate from other optional features, or in combination with other optional features.

A further embodiment of any of the foregoing embodiments may additionally and/or alternatively include the computational fluid dynamics modeling of the gas flow predicts a flow field inside the chamber.

A further embodiment of any of the foregoing embodiments may additionally and/or alternatively include laser plume includes a vector having velocity and direction influenced by the gas flow and laser/melt pool/powder bed dynamics.

A further embodiment of any of the foregoing embodiments may additionally and/or alternatively include the gas flow influences the laser plume formed within the chamber, wherein the gas flow entrains the laser plume and influences a laser spot size and power density.

A further embodiment of any of the foregoing embodiments may additionally and/or alternatively include the system for additive manufacturing further comprising an instruction to employ a laser plume projection which indicates the effect of a laser plume ejection velocity from a melt pool.

A further embodiment of any of the foregoing embodiments may additionally and/or alternatively include the system for additive manufacturing further comprising an instruction to employ computational fluid dynamics for the prediction of laser plume distribution.

A further embodiment of any of the foregoing embodiments may additionally and/or alternatively include the system for additive manufacturing further comprising an instruction to integrate laser plume interaction risk by controlling at least one laser to move the laser plume to a location that reduces formation of defects.

A further embodiment of any of the foregoing embodiments may additionally and/or alternatively include the system for additive manufacturing further comprising an instruction to relay nominal laser spot size and power density to the muti-laser defect model.

A further embodiment of any of the foregoing embodiments may additionally and/or alternatively include the system for additive manufacturing further comprising an instruction to relay a second laser spot size and power density impacted by operating within a first laser plume to the muti-laser defect model.

A further embodiment of any of the foregoing embodiments may additionally and/or alternatively include the system for additive manufacturing further comprising an instruction to relay the multi-laser defect model prediction to an analysis tool utilized to predict flaw formation in multi-laser powder bed fusion additive manufacturing.

A further embodiment of any of the foregoing embodiments may additionally and/or alternatively include a lack of fusion in the powder bed is responsive to a spot size and power density influenced by a laser plume interaction.

A further embodiment of any of the foregoing embodiments may additionally and/or alternatively include the system for additive manufacturing further comprising an instruction to develop a plume interaction zone map for different layers of the manufacture of the part.

A further embodiment of any of the foregoing embodiments may additionally and/or alternatively include the system for additive manufacturing further comprising an instruction to determine a laser attenuation coefficient wherein the laser attenuation coefficient is the power loss ratio of the laser to a laser incident power.

In accordance with the present disclosure, there is provided a process for a laser plume interaction for a predictive defect model for multi-laser additive manufacturing of a part comprising executing computational fluid dynamics modeling of a gas flow in an additive manufacturing machine manufacturing chamber; approximating a laser plume relative to a melt pool on a powder bed disposed on a build plate within the manufacturing chamber; executing a space-time analysis to identify a laser plume interaction; creating a plume interaction zone map; feeding the plume interaction zone map prediction into a multi-laser defect model; and predicting defect location and density to accumulate lack-of-fusion risk as a function of part placement, orientation, and scan strategy.

Particular embodiments may further include at least one, or a plurality of, the following optional features. Each of these optional features may be added separate from other optional features, or in combination with other optional features.

A further embodiment of any of the foregoing embodiments may additionally and/or alternatively include the process further comprising employing a laser plume projection which indicates the effect of a laser plume ejection velocity from a melt pool.

A further embodiment of any of the foregoing embodiments may additionally and/or alternatively include the process further comprising employing computational fluid dynamics for the prediction of laser plume distribution.

A further embodiment of any of the foregoing embodiments may additionally and/or alternatively include the process further comprising integrating laser plume interaction risk by controlling at least one laser to move the laser plume to a location that reduces formation of defects.

A further embodiment of any of the foregoing embodiments may additionally and/or alternatively include the process further comprising relaying nominal laser spot size and power density to the muti-laser defect model; relaying a second laser spot size and power density impacted by operating within a first laser plume to the muti-laser defect model; and relaying the multi-laser defect model prediction to an analysis tool utilized to predict flaw formation in multi-laser powder bed fusion additive manufacturing.

A further embodiment of any of the foregoing embodiments may additionally and/or alternatively include the process further comprising developing a plume interaction zone map for different layers of the manufacture of the part.

A further embodiment of any of the foregoing embodiments may additionally and/or alternatively include the process further comprising determining a laser attenuation coefficient wherein the laser attenuation coefficient is the power loss ratio of the laser to a laser incident power.

Other details of the process are set forth in the following detailed description and the accompanying drawings wherein like reference numerals depict like elements.
Fig. 1 is a schematic representation of an exemplary additive manufacturing machine.
Fig. 2 is a schematic representation of a part created by a single laser along side the part created by multiple lasers.
Fig. 3 is a schematic representation of interaction between lasers via laser plume and spatter particles.
Fig. 4 is a schematic representation of a process diagram.
Fig. 5 is a schematic representation of gas flow in the manufacturing build chamber.
Fig. 6 is a schematic diagram of a laser plume inside the manufacturing build chamber.
Fig. 7 is a schematic diagram plan view of the laser plume influenced by gas flow.
Fig. 8 is a schematic representation of 2D laser plume projection diagram.
Fig. 9 is a schematic representation of a laser plume approximation diagram.
Fig. 10 is a schematic representation of an exemplary plume stencil.
Fig. 11 is a schematic representation of the additive manufacturing build plate with predicted laser plume stencil with no laser plume interaction.
Fig. 12 is a schematic representation of the additive manufacturing build plate with predicted laser plume stencil with laser plume interaction.
Fig. 13 is a schematic representation of predicted laser plume interaction map.
Fig. 14 is a schematic representation of an exemplary 3D laser interaction diagram.
Fig. 15 is a schematic representation of an exemplary laser attenuation coefficient.
Fig. 16 is a schematic representation of an exemplary defect map with consideration of laser plume interaction.
Fig. 17 is a schematic representation of an exemplary defect map without consideration of laser plume interaction.
Fig. 18 is a schematic representation of a 3D defect map including laser plume interaction.
Fig. 19 is a schematic representation of an X-axis view of the 3D map of Fig. 18.
Fig. 20 is a schematic representation of a Y-axis view of the 3D map of Fig. 18.
Fig. 21 is a schematic representation of an exemplary 3D variable laser interaction diagram.
Fig. 22 is a schematic representation of a 3D defect map including variable laser plume interaction.
Fig. 23 is a schematic representation of the X-axis view of the 3D defect map of Fig. 22.
Fig. 24 is a schematic representation of an exemplary defect map with consideration of variable laser plume interaction.

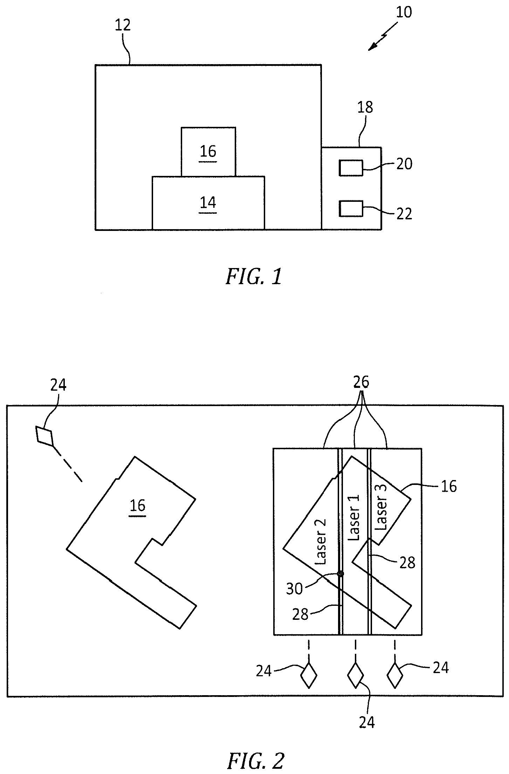

Referring now to Fig. 1, schematically illustrates an additive manufacturing machine 10, such as a laser powder bed fusion additive manufacturing (PBFAM) machine. In alternate examples, the powder bed fusion machine can be an electron beam powder bed fusion machine. The exemplary additive manufacturing machine 10 includes a manufacturing chamber 12 with a platform 14 upon which a part 16 (alternatively referred to as a work piece) is additively manufactured. A controller 18 is connected to the chamber 12 and controls the additive manufacturing process according to any known additive manufacturing control system.

Included within the controller 18 is a processor 20 that receives and interprets input operations to define a sequence of the additive manufacturing. As utilized herein "operations" refers to instructions specifying operational conditions for one or more step in an additive manufacturing process. The controller 18 can, in some examples, include user interface devices such as a keyboard and view screen. In alternative examples, the controller 18 can include a wireless or wired communication apparatus for communicating with a remote user input device such as a PC.

Also included in the controller 18 is a memory 22. In some examples, the controller 18 receives a desired additive manufacturing operation, or sequence of operations, and evaluates the entered operation(s) to determine if the resultant part 16 will be free of flaws. For the purposes of the instant disclosure, free of flaws, or flaw free, refers to a part 16 or workpiece with no flaws causing the part or workpiece to fall outside of predefined flaw tolerance. By way of example, the predefined tolerances can include an amount of unmelt, a surface roughness, or any other measurable property of the part 16. By way of example, factors impacting the output parameters can include material properties, environmental conditions, laser power, laser speed, or any other factors. While described and illustrated herein as a component of a laser powder bed fusion additive manufacturing machine, the software configuration and operations can, in some examples, be embodied as a distinct software program independent of the additive manufacturing machine or included within any other type of additive manufacturing machine.

A build strategy is parsed and/or specifically prescribed scan vectors are used to create stripe and hatch definitions in each layer of the build. The additive build is simulated layer-by-layer. The output is a map in build parameter space (e.g. laser power, laser speed, layer thickness, etc.). The map is partitioned into different regions reflecting whether flaws are present: lack of fusion, keyholing, the flaw-free "good" zone, etc. A process map is optionally location-specific and dependent upon geometry. If the entirety of a part is in the "good" zone of the process map, it is predicted to be flaw-free.

By using the defined process map, a technician can generate a part 16, or design a sequence of operations to generate a part 16, without requiring substantial empirical prototyping to be performed. This, in turn, allows the part to be designed faster, and with less expense, due to the substantially reduced number of physical iterations performed.

Referring also to Fig. 2, the part 16 is shown as being created by a single laser and multiple lasers. The part 16 shown on the left side of Fig. 2 is laid down by use of a single laser 24. The whole part 16 is assigned to the single laser 24. The part 16 shown to the right side of Fig. 2 is assigned to multiple lasers 24. The multi-laser fusion is configured to increase the rate at which the part 16 can be built. The single laser fusion can have a different set of heat flux, interlayer dwell time, underlying temperature than the multi-laser fusion configuration.

With multi-laser fusion processes the part 16 can be divided into multiple regions 26, such as laser 1 region, laser 2 region and laser 3 region, as shown. Each region 26 can be processed by the different lasers 24. So, each region may have a different set of heat flux, interlayer dwell time, underlying temperature, and the like.

In Fig. 2, the multi-laser arrangement can include laser interface 28 along the common boundaries of the regions 26. It is possible to create a laser interaction zone 30 near these interfaces 28. The lasers 24 can create conditions that cause interaction between the adjoining lasers 24.

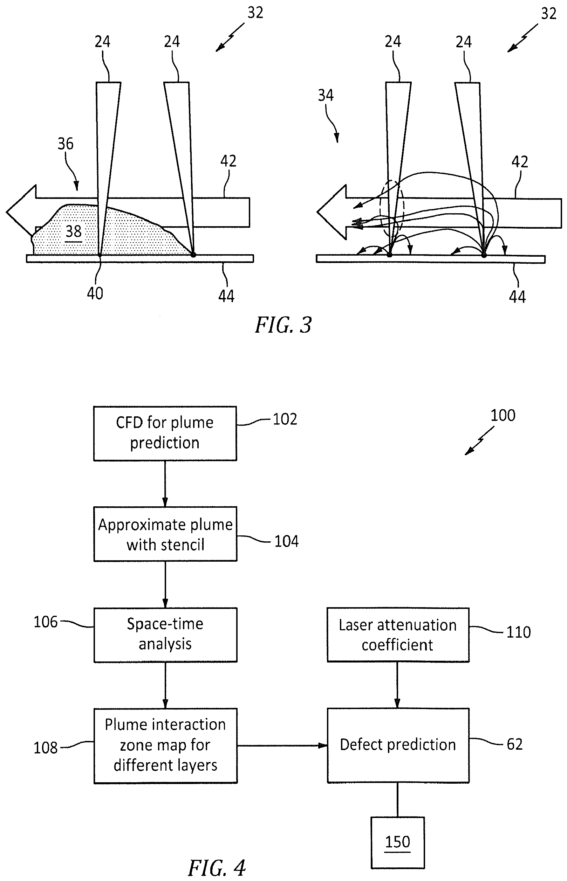

Referring also to Fig. 3, showing different plume/spatter interference 32. The laser interaction zone 30 is caused by the two lasers operating simultaneous and contemporaneously adjacent along the laser interface 28. The interaction between the two lasers 24 can involve spatter particle obscuration 34 (shown on the right) which can result in increased occurrence of lack of fusion defects 34.

Additionally, (shown on the left) the interaction between the two lasers 24 can include a laser plume interaction 36. The laser plume interaction 36 can be defined as an attenuation of the laser 24, that is a defocusing by airborne condensate in a plume 38 formed from billowing airborne condensate of laser/powder bed byproducts. The laser plume interaction 36 can arise when a downwind laser 24 operates downwind of an upwind laser 24. The downwind laser 24 must penetrate the plume 38 produced by the upwind laser 24. The downwind laser 24 passing through the plume 38 can be degraded and have a reduced spot intensity 40. The gas flow 42 in the chamber 12 influences the direction of the plume 38 and creates the downwind laser 24 and upwind laser 24 relationship between the lasers 24. The laser interaction zone 30 can include conditions that negatively impact one or more of the contemporaneous lasers 24 that results in deviation from normal laser application, intensity, location and the like. Laser plume interaction 36 can influence the quality of the build within the laser interaction zone 30.

Referring also to Fig. 4, a multi-step process to predict effect of laser-plume interaction on laser powder bed fusion defects is shown. The process 100 can include an approach to assess the effect of laser plume interaction 36. The first step 102 can include employing computational fluid dynamics (CFD) to predict plume 38 direction.

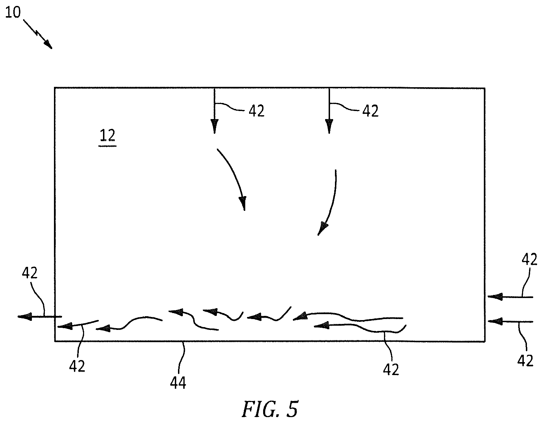

Referring also to Fig. 5, shows an exemplary additive manufacturing machine 10 manufacturing chamber 12. The gas flow 42 is shown relative to a build plate 44 in the manufacturing chamber 42. The computational fluid dynamics (CFD) modeling of the gas flow 42 in the manufacturing chamber 12 can result in a prediction of the flow field inside the chamber 12 as depicted. The prediction of the gas flow 42 direction as shown by arrows in the chamber 12 provides a basis for the estimation of laser plume shape 46 and flow direction as described in more detail below. The plume shape 46 can be used to assess laser interactions.

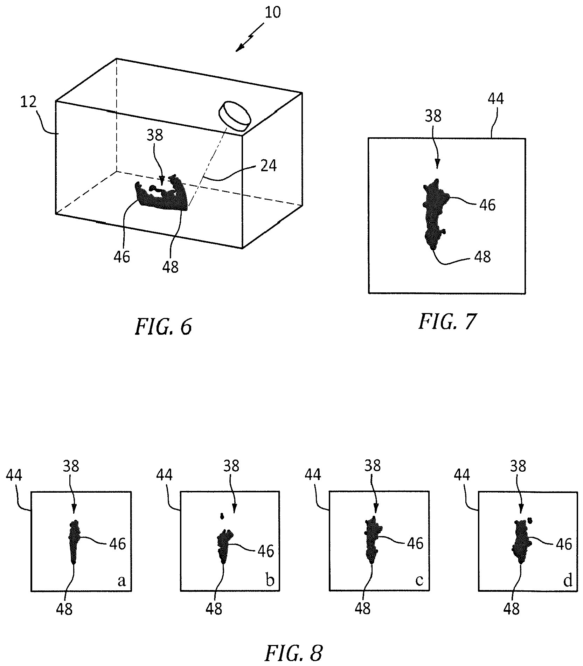

Referring also to Fig. 6, a laser plume prediction inside the manufacturing build chamber, Fig. 7, a top-down view of the predicted vapor plume (black is the outline of the vapor plume, and the black square perimeter is the build plate, and Fig. 8, a computed 2D laser plume projection showing the effect of plume ejection velocity from melt pool 48, employing computational fluid dynamics (CFD) for the prediction of plume distribution. These predictions are used in the next steps to identify the laser-plume interaction zones.

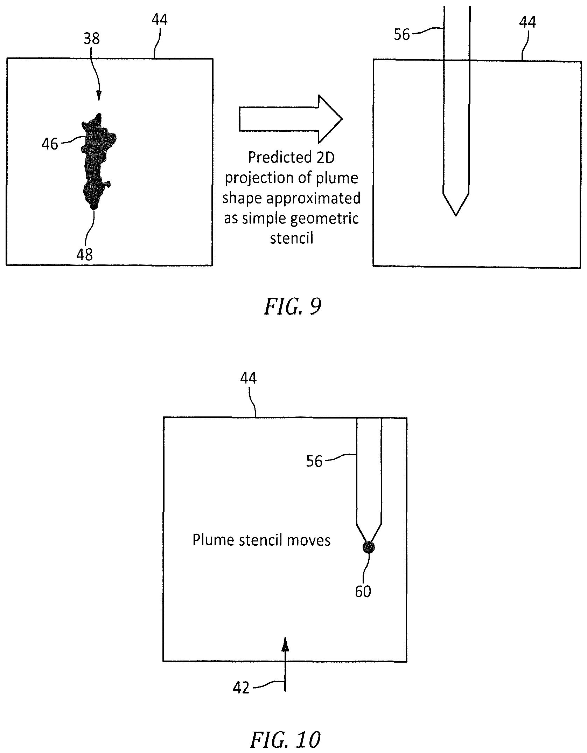

The next step 104 in the process 100 includes approximating the plume with a stencil. Referring also to Fig. 9, the size and shape of the laser plume 38 can be approximated to a representative stencil 56.

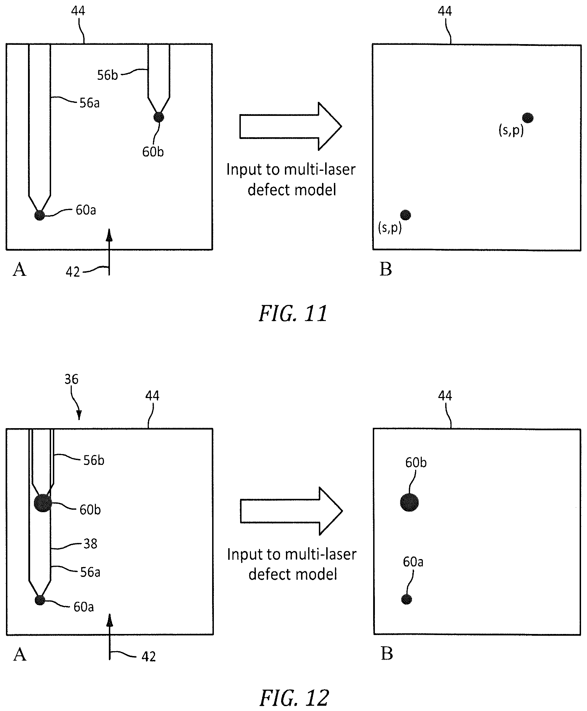

The next step 106 includes a space time analysis. Referring also to Fig. 10, Fig. 11, and Fig. 12 depicting the space time analysis. In Fig. 10, a representation of an exemplary plume stencil 56. The build plate 44 is shown with a laser spot 60 indicating the location of the laser 24 interacting with the melt pool 48. The stencil 56 indicates the predicted location of the laser plume 38 across the build plate 44 as influenced by the downwind location relative to the gas flow 42 direction. Referring to Fig. 11, an additive manufacturing build plate with predicted laser plume stencil with no laser plume interaction is shown. At panel A (left side) first laser spot 60a is shown with a predicted stencil 56a representing the predicted laser plume 38. A second laser spot 60b is also shown with a predicted stencil 56b representing the predicted laser plume 38. In the adjacent panel B (right side), shows each of the first laser spot 60a and the second laser spot 60b, each laser spot 60a, 60b having a nominal spot size S and a nominal power intensity P. There is no laser plume interaction 36 in this case. A multi-laser defect model 62 can be provided with these nominal laser spots 60a, 60b data. The muti-laser defect model 62 can be employed with an analysis tool 150 utilized to predict flaw formation in multi-laser powder bed fusion additive manufacturing.

Referring also to Fig. 12, showing a representation of the additive manufacturing build plate with predicted laser plume stencil with laser plume interaction. In Fig. 12, panel A depicts laser plume interaction 36. The second laser spot 60b is shown as being impacted by operating within the laser plume 38 of the first laser spot 60a as depicted by the stencil 56a overlapping the stencil 56b. The muti-laser defect model 62 can be provided with these laser spot 60a, 60b data. As seen in panel B, the first laser spot 60a is shown as being nominal, that is having no impact on spot size S or power density P. However, the second spot 60b is shown as a larger spot size S and having a lower power density P. The relationship of the second spot 60b can be expressed as ((1+f₁)s, (1-f₂)p, where f₁, f₂ > 0. The multi-laser defect model 62 can be provided with this data as well.

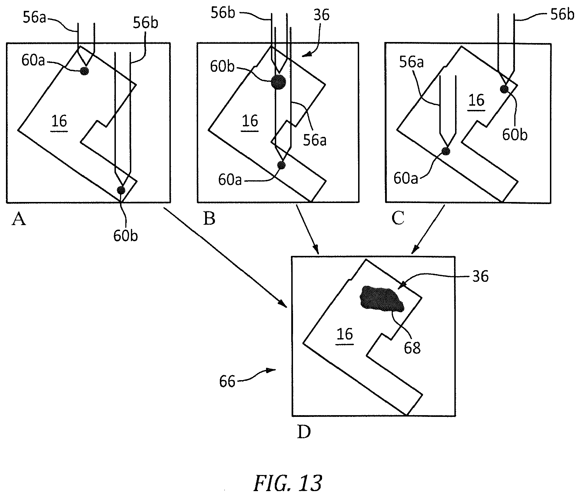

The next step 108 includes developing a plume interaction zone map for different layers. Referring also to Fig. 13 showing representation of predicted laser plume interaction map for part 16 at a given layer. Fig. 13 includes multiple panels A, B, C representing multiple scan vectors to identify all instances of laser plume interaction 36 during the build for part 16. Panel A (upper left side) showing first laser spot 60a with a predicted stencil 56a representing the predicted laser plume 38. A second laser spot 60b is also shown with a predicted stencil 56b representing the predicted laser plume 38. There is no laser plume interaction in panel A.

Panel B (upper center) depicts a laser plume interaction 36. The first laser plume 56a overlaps the second laser spot 60b. Second laser spot 60b is shown as having a larger spot size and lower power density. Second laser spot 60b indicates a local variation from the nominal first laser spot 60a. Panel B can represent a particular time and location with a particular laser plume interaction 36 being predicted.

Panel C (upper right) represents the nth iteration of a layer and time in the build out of multiple iterations. A first laser spot 60a with a predicted stencil 56a representing the predicted laser plume 38. A second laser spot 60b is also shown with a predicted stencil 56b representing the predicted laser plume 38. There is no laser plume interaction in panel C.

Panel D (lower center) represents the layer wise map 66 for local variations from nominal spot size and power density. A local deviation 68 from the nominal spot size and power density caused by the accumulation of laser plume interactions 36. The map 66 can be employed in the multi-laser defect model 62.

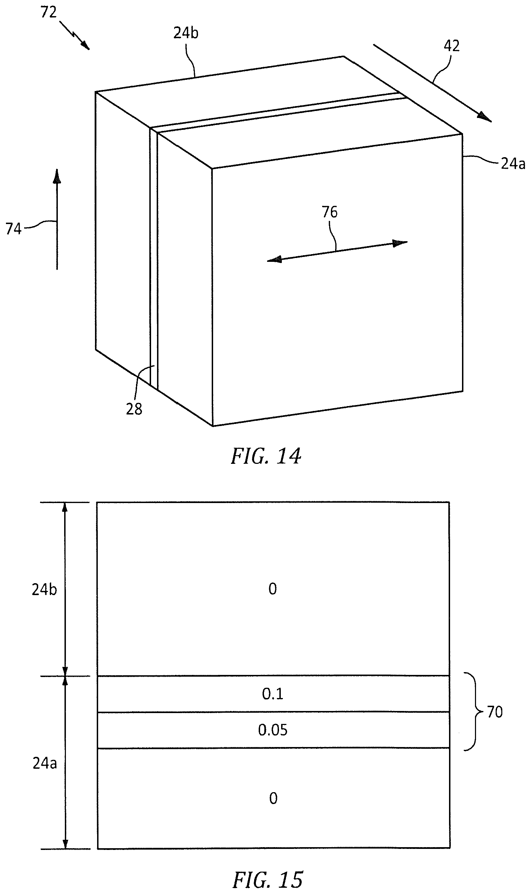

The step 110 includes determining a laser attenuation coefficient 70. The laser attenuation coefficient can be defined as the power loss ratio of the laser to the laser incident power. Referring to Fig. 14 showing an exemplary 3D laser interaction diagram 72. The diagram 72 illustrates the relationship between a first laser 24a and a second laser 24b relative to a gas flow 42 direction. A laser interface 28 is shown between the first laser 24a and second laser 24b. The build direction 74 is shown as an upward arrow. The laser scan vector 76 is shown as a double headed arrow.

Figure 15 shows a diagram with the relationship of laser 24a and laser 24b in a given layer and the laser attenuation coefficient 70. The laser attenuation coefficient 70 is shown with varying values based on the relative relationship to the laser plume interaction 36 downwind of the gas flow 42.

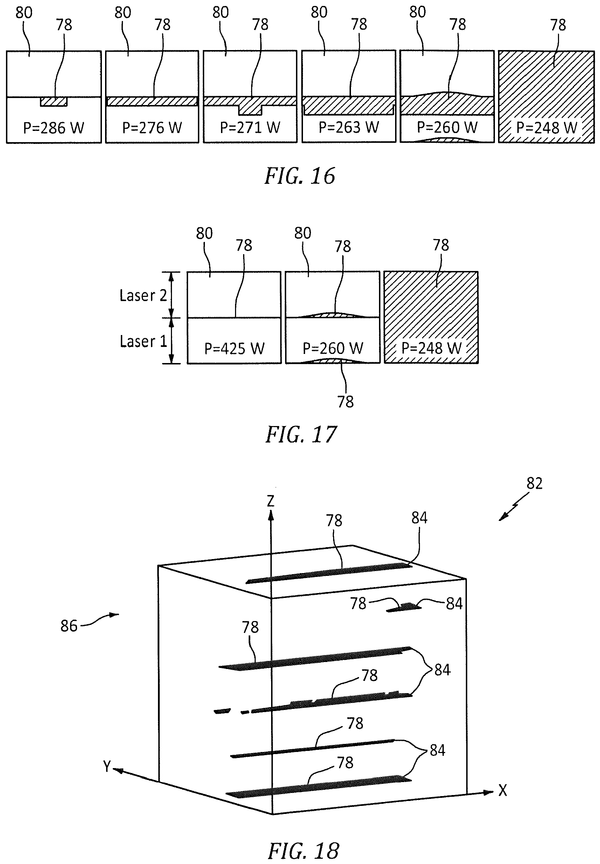

Figure 16 illustrates a defect map with consideration of laser plume interaction. Each panel in Fig. 16 represents a scan layer with the predicted defect associated with the laser plume interaction predicted at a particular lower laser power density P. The hashed section represents an un-melted powder bed material 78. The remainder represents the defect free material 80. The far right side panel shows an entire layer as being un-melted due to low laser power density P as a result of the laser plume interaction 36.

Figure 17 illustrates a defect map without consideration of laser plume interaction. Each panel in Fig. 17 represents a scan layer with the predicted defect without considering the laser plume interaction predicted at the incident laser power density P. The hashed section represents an un-melted powder bed material 78. The remainder represents the defect free material 80. The far right side panel shows an entire layer as being un-melted due to low laser power density P. The defect maps can be employed for use with the defect prediction module 62. A comparison between figures 16 and 17 reveals that incorporating the effect of laser-plume interaction on defect formation factually increases the power threshold for unmelt flaw generation in the material.

Fig. 18 illustrates a 3D defect map 82 including laser plume interaction. Each layer 84 in the build 86 can include a predicted defect from un-melted powder bed material 78 from the laser plume interaction predicted for the map 82. In the exemplary map 82 a sixty-seven degree rotation between consecutive layers 84 causes different temperature patterns in different layers 84, which accounts for the varying location of the defects from un-melted material within the laser attenuation.

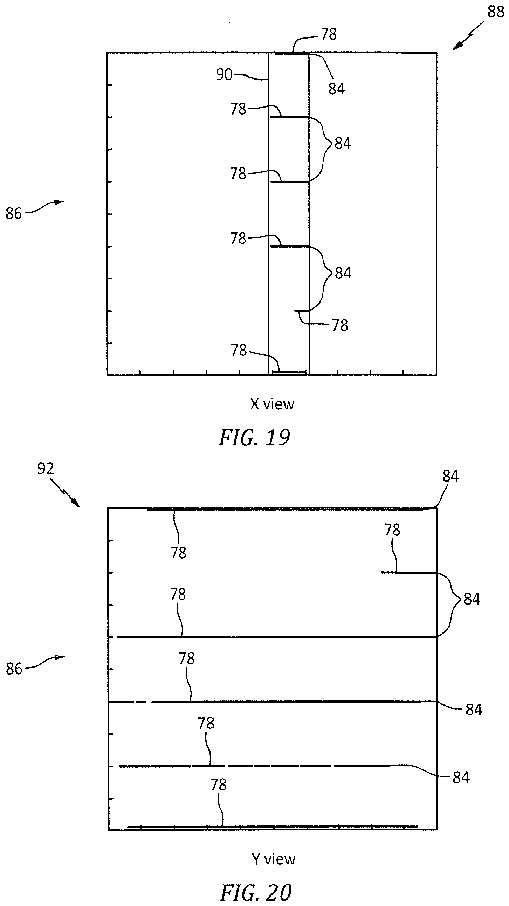

Fig. 19 illustrates the X-axis view 88 of the 3D map 82. The layers 84 include the predicted defect from un-melted powder bed material 78 from the laser plume interaction predicted for the map 82 as seen along the X-axis view. The region 90 indicates a region with ten percent laser attenuation.

Fig. 20 illustrates the Y-axis view 90 of the 3D map 82. The layers 84 include the predicted defect from un-melted powder bed material 78 from the laser plume interaction predicted for the map 82 as seen along the Y-axis view. The 3D defect map in Fig. 18 provides the spatial distribution of defects for different layers within the part in one single map.

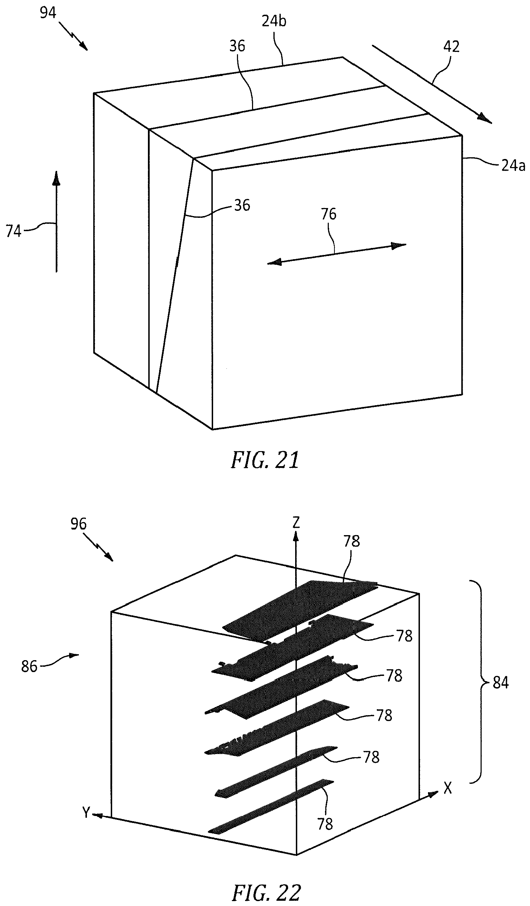

Fig. 21 illustrates an exemplary 3D variable laser interaction diagram 94. The diagram 94 illustrates the relationship between a first laser 24a and a second laser 24b relative to a gas flow 42 direction. Laser 24a is downwind from laser 24b. A variable laser plume interaction 36 is shown between the first laser 24a and second laser 24b. The laser plume interaction 36 is shown as increasing with height. There are other examples when the laser plume interaction 36 is constant with height. The build direction 74 is shown as an upward arrow. The laser scan vector 76 is shown as a double headed arrow.

Fig. 22 illustrates a 3D defect map 96 including variable laser plume interaction zones. Each layer 84 in the build 86 can include a predicted defect from un-melted powder bed material 78 from the laser plume interaction predicted for the map 96. The defects account for a region with ten percent laser attenuation 90.

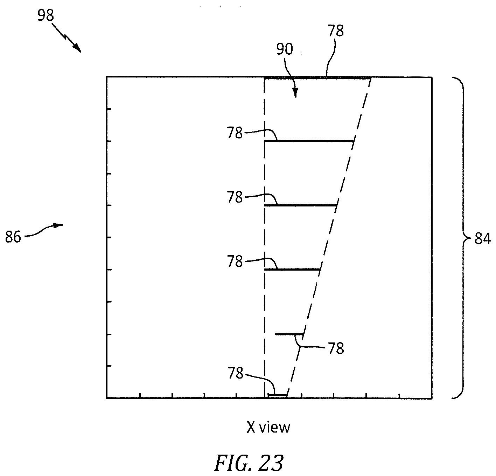

Fig. 23 illustrates the X-axis view of the 3D map 96. The layers 84 include the predicted defect from un-melted powder bed material 78 from the laser plume interaction predicted for the map 96 as seen along the X-axis view. The region 90 indicates a region with ten percent laser attenuation.

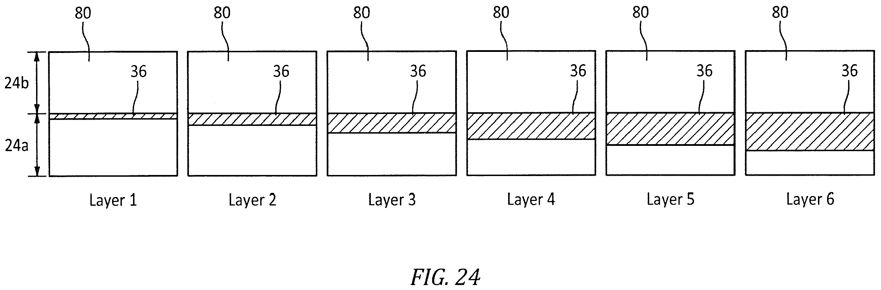

Fig. 24 illustrates different layers along the build direction 74 with consideration of variable laser plume interaction zones. Each panel in Fig. 24 represents a scan layer (layer 1 to layer 6) with the predicted laser plume interaction 36 at a particular lower laser power density P. The hashed section represents the predicted laser plume interaction 36. The remainder represents the normal melt material 80 at the nominal laser power density and size. The defect code could consider variable laser-plume interaction zones from layer to layer as predicted by computational fluid dynamics (CFD) simulations.

A technical advantage of the disclosed process can include the prediction of laser plume interaction, which can detect the lack of fusion defects.

Another technical advantage of the disclosed process can include prediction of the lack of fusion defects caused by local decrease in power density incident on the powder bed.

Another technical advantage of the process can include application to multi-laser powder bed fusion additive manufacturing.

Another technical advantage of the process can include providing a higher quality multi-laser powder bed fusion additive manufacturing.

Another technical advantage of the process can include optimized laser path planning to maximize laser on-time while minimizing laser interaction and therefore defect production. This can result in faster powder bed fusion additive manufacturing processing.

Another technical advantage of the process can include helping engineers and designers understand and develop multi-laser powder bed fusion additive manufacturing processes to increase rate of production and build large size parts.

Another technical advantage of the process can include minimizing the costly and time-consuming trial and error practices which are currently used for qualifying additive manufacturing parts.

Another technical advantage of the process can include information obtained from this predictive model can be utilized to additively manufacture high quality parts which in turn minimizes post-build operations in the production process chain.

There has been provided a process. While the process has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A system comprising a computer readable storage device readable by the system, tangibly embodying a program having a set of instructions executable by the system to perform the following steps for predicting defects in powder bed fusion additive manufacturing process for a part, the set of instructions comprising:
an instruction to execute computational fluid dynamics modeling of a gas flow in an additive manufacturing machine manufacturing chamber;
an instruction to approximate a laser plume relative to a melt pool on a powder bed disposed on a build plate within the manufacturing chamber;
an instruction to execute space-time analysis to identify a laser plume interaction;
an instruction to create a plume interaction zone map;
an instruction to feed the plume interaction zone map prediction into a multi-laser defect model; and
an instruction to predict defect location and density to accumulate lack-of-fusion risk as a function of part placement, orientation, and scan strategy.

2. The system for additive manufacturing according to claim 1,
wherein the computational fluid dynamics modeling of the gas flow predicts a flow field inside the chamber.

3. The system for additive manufacturing according to claim 1 or 2,
wherein laser plume includes a vector having velocity and direction influenced by the gas flow and laser/melt pool/powder bed dynamics.

4. The system for additive manufacturing according to any of claims 1 to 3,
wherein the gas flow influences the laser plume formed within the chamber, wherein the gas flow entrains the laser plume and influences a laser spot size and power density.

5. The system for additive manufacturing according to any of claims 1 to 4,
further comprising an instruction to employ a laser plume projection which indicates the effect of a laser plume ejection velocity from a melt pool; and/or
further comprising an instruction to employ computational fluid dynamics for the prediction of laser plume distribution.

6. The system for additive manufacturing according to any of claims 1 to 5,
further comprising an instruction to integrate laser plume interaction risk by controlling at least one laser to move the laser plume to a location that reduces formation of defects.

7. The system for additive manufacturing according to any of claims 1 to 6,
further comprising an instruction to relay nominal laser spot size and power density to the multi-laser defect model; and/or
further comprising an instruction to relay a second laser spot size and power density impacted by operating within a first laser plume to the multi-laser defect model.

8. The system for additive manufacturing according to any of claims 1 to 7,
further comprising an instruction to relay the multi-laser defect model prediction to an analysis tool utilized to predict flaw formation in multi-laser powder bed fusion additive manufacturing.

9. The system for additive manufacturing according to any of claims 1 to 8,
wherein a lack of fusion in the powder bed is responsive to a spot size and power density influenced by a laser plume interaction.

10. The system for additive manufacturing according to any of claims 1 to 9, further comprising:
an instruction to develop a plume interaction zone map for different layers of the manufacture of the part.

11. The system for additive manufacturing according to any of claims 1 to 10, further comprising:
an instruction to determine a laser attenuation coefficient wherein the laser attenuation coefficient is the power loss ratio of the laser to a laser incident power.

12. A process for a laser plume interaction for a predictive defect model for multi-laser additive manufacturing of a part comprising:
executing computational fluid dynamics modeling of a gas flow in an additive manufacturing machine manufacturing chamber;
approximating a laser plume relative to a melt pool on a powder bed disposed on a build plate within the manufacturing chamber;
executing a space-time analysis to identify a laser plume interaction;
creating a plume interaction zone map;
feeding the plume interaction zone map prediction into a multi-laser defect model; and
predicting defect location and density to accumulate lack-of-fusion risk as a function of part placement, orientation, and scan strategy.

13. The process of claim 12,
further comprising employing a laser plume projection which indicates the effect of a laser plume ejection velocity from a melt pool; and/or
further comprising:
employing computational fluid dynamics for the prediction of laser plume distribution.

14. The process of claim 12 or 13,
further comprising integrating laser plume interaction risk by controlling at least one laser to move the laser plume to a location that reduces formation of defects; and/or
further comprising:
relaying nominal laser spot size and power density to the multi-laser defect model;
relaying a second laser spot size and power density impacted by operating within a first laser plume to the multi-laser defect model; and
relaying the multi-laser defect model prediction to an analysis tool utilized to predict flaw formation in multi-laser powder bed fusion additive manufacturing.

15. The process of any of claims 12 to 14,
further comprising developing a plume interaction zone map for different layers of the manufacture of the part; and/or
further comprising determining a laser attenuation coefficient wherein the laser attenuation coefficient is the power loss ratio of the laser to a laser incident power.
